# EUROPEAN PATENT APPLICATION

(11) **EP 1 293 682 A2**
(43) Date of publication of application: **19.03.2003**
(21) Application number: 02256446.2
(22) Date of filing: 17.09.2002
(51) Int. Cl.: F04D 29/60, F04D 19/04

(54) **Vacuum pump support**

(30) Priority: 17.09.2001 JP 2001280983
(71) Applicant: BOC Edwards Technologies, Limited, Narashino-shi, Chiba (JP)
(72) Inventor: Yamauchi, Akira, Mihama-ku, Chiba-shi, Chiba (JP); Ishikawa, Takaharu, Mihama-ku, Chiba-shi, Chiba (JP)
(74) Representative: Sturt, Clifford Mark

(57) **Abstract**

When a vacuum pump (1) is installed over a vacuum system in a turned-over posture via a damper (2), a tension is applied upward to the vacuum pump (1) by an elastic body (38,57,58) one end of which is fixed to a fixed portion such as a ceiling (42), by which contraction caused by the weight of the vacuum pump (1) and the atmospheric pressure applied when the interior of the damper becomes a vacuum is relaxed. Thereby, the decrease in vibration damping capacity of the damper caused by the compression of a rubber of the damper (2) can be reduced. Also, when the vacuum pump (1) is installed at the side of the vacuum system in a horizontal posture via the damper (2), a tension is applied upward to the vacuum pump by the elastic body (38,57,58) one end of which is fixed to the fixed portion such as a ceiling (42) to keep the horizontal posture of the vacuum pump (1). Thereby, the damper (2) is prevented from being deflected by the weight of the vacuum pump, and thus high vibration absorbing capacity of the damper can be maintained.

## Description

### BACKGROUND OF THE INVENTION

### 1. Field of the Invention

The present invention relates to a vacuum pump for obtaining a vacuum by evacuating a gas. More particularly, it relates to a vacuum pump having a mechanism for restraining the transmission of vibrations occurring, for example, in the vacuum pump.

### 2. Description of the Related Art

Vacuum pumps have been used in various fields including the industrial field and the research field. Various types of vacuum pumps are used according to their applications. As science and technology develop, the capacity required for these pumps has increased.

Among these various types of vacuum pumps, a turbo molecular pump is often used to realize a highly vacuum environment.

The turbo molecular pump is constructed so that a rotor rotates at a high speed in a casing (housing) having an inlet and an outlet. On the inner peripheral surface of the casing, stator blades are disposed in a multi-stage form, and on the other hand, the rotor is provided with rotor blades radially in a multi-stage form. When the rotor rotates at a high speed, a gas is sucked through the inlet and discharged through the outlet by the action of the rotor blades and stator blades.

For the turbo molecular pump, when the rotor rotates at a high speed, vibrations are produced by a cogging torque of a motor. Also, because the rotor is not balanced completely, vibrations are also produced by deflection.

Therefore, in the case where the turbo molecular pump is connected to a vacuum system that must avoid the propagation of vibrations, such as a mirror cylinder and measurement chamber of an electron microscope, the turbo molecular pump is connected via a damper. The damper is made up of a cylindrical rubber and a bellows for holding a vacuum therein so as to absorb vibrations produced in the turbo molecular pump.

The cogging torque means a fluctuation in torque of motor caused by the rotation of the rotor.

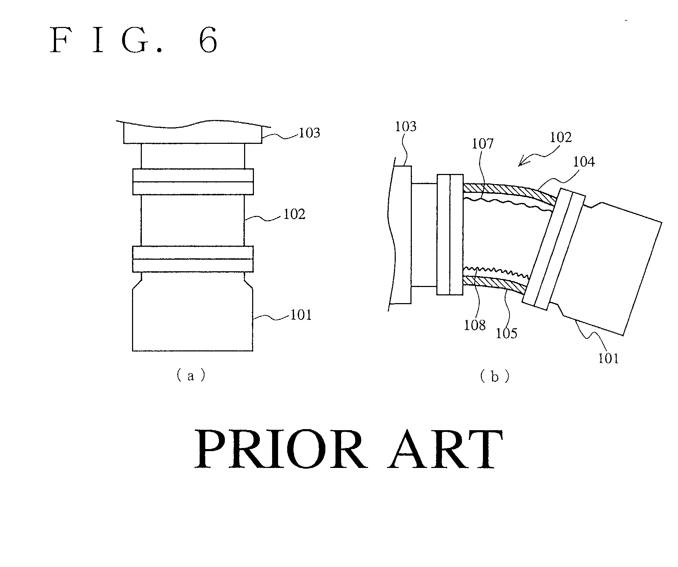

FIG. 6(A) is a view showing a state in which the turbo molecular pump is connected to the vacuum system (for example, a measurement chamber of an electron microscope) by the conventional method.

A turbo molecular pump 101 is connected to a vacuum system 103 via a damper 102. The turbo molecular pump 101 is provided in a form of being hung from the vacuum system 103, and vibrations propagating from the turbo molecular pump 101 to the vacuum system 103 is absorbed by the damper 102. The lower end of the turbo molecular pump 101 is sometimes fixed to a floor. However, in order to avoid the propagation of vibrations via the floor, the turbo molecular pump 101 is generally used in a form of being hung in the air.

Since the turbo molecular pump 101 is used in a form of being hung from the vacuum system 103 as described above, the conventional mounting posture of the turbo molecular pump 101 is only a vertical posture with respect to the vacuum system 103.

### SUMMARY OF THE INVENTION

However, in the case where it is desirable to connect the turbo molecular pump 101 horizontally to the vacuum system 103 or connect the turbo molecular pump 101 vertically over the vacuum system 103, such a connection has conventionally been unable to be made.

FIG. 6(B) is a view showing a case where the turbo molecular pump 101 is connected horizontally to the vacuum system 103.

The damper 102 is shown in cross section. Rubbers 104 and 105 designate portions of the same cylindrical rubber; the rubber 104 designates an upper portion, and the rubber 105 designates a lower portion.

Similarly, bellows 107 and 108 designate portions of the same cylindrical bellows; the bellows 107 designates an upper portion, and the bellows 108 designates a lower portion.

As shown in FIG. 6, if the turbo molecular pump 101 is connected in the horizontal direction, the damper 102 is deflected by the weight of the turbo molecular pump 101, so that the rubber 104 and the bellows 107 are expanded, and the rubber 105 and the bellows 108 are compressed. Specifically, when the turbo molecular pump 101 is installed horizontally, the rubber 105 and the bellows 108 are locally collapsed by a moment caused by the weight of pump.

As a result, the spring rigidity of the rubber 105 and the bellows 108 increases, and thus the resonance point of frequency characteristic of vibration transmission shifts to higher frequencies, which poses a problem in that the vibration damping effect decreases as a whole. Also, in some cases, there is a possibility that vibrations are transmitted to the vacuum system 103 by the contact of an interposed object such as a detent.

Also, although not shown in the figure, if the turbo molecular pump 101 is connected to the upper part of the vacuum system 103 in a state of being turned over, the rubber of the damper 102 is greatly collapsed by the weight of pump, so that the spring rigidity of rubber increases. As a result, there arises a problem in that the resonance point of frequency characteristic of vibration transmission shifts to higher frequencies, so that the vibration damping effect decreases as a whole.

Further, if the turbo molecular pump 101 is operated regardless of the mounting posture thereof, there arises a problem in that the damper is contracted and the rubber rigidity is increased by the atmospheric pressure, so that the vibration absorbing capacity decreases.

An object of the present invention is to provide a vacuum pump having high vibration damping capacity regardless of the mounting posture when the vacuum pump is installed in a predetermined posture.

According to the present invention, high vibration damping capacity can be exhibited regardless of the mounting postures of the vacuum pump and a damper.

To achieve the above object, the present invention provides a vacuum pump comprising a vacuum pump body including a casing formed with an inlet and an outlet and evacuating means which is housed in the casing to suck a gas from a vacuum system through the inlet and discharge the gas through the outlet, and further comprising extending means for extending deformation occurring in a damper attached to the inlet due to the weight of the vacuum pump body when the vacuum pump body is installed in a predetermined mounting posture (first aspect).

In the first aspect, the vacuum pump can be configured so that the extending means is an elastic body one end of which is attached to a fixed portion and the other end of which is attached to the vacuum pump, and the elastic body can be configured so as to apply a tension in the direction such as to restore the shape of the deformed damper (second aspect).

In the second aspect, the vacuum pump can be configured so that the vacuum pump further comprises tension adjusting means for adjusting the tension of the elastic body (third aspect).

In the second aspect, the vacuum pump can be configured so that the predetermined mounting posture is horizontal with respect to the vacuum system, and the elastic body applies an elastic force upward to the vacuum pump (fourth aspect).

In the third aspect, the vacuum pump can be configured so that the predetermined mounting posture is horizontal with respect to the vacuum system, and the elastic body applies an elastic force upward to the vacuum pump (fifth aspect).

In the second aspect, the vacuum pump can be configured so that the predetermined mounting posture is upward with respect to the vacuum system, and the elastic body applies an elastic force upward to the vacuum pump (sixth aspect).

In the third aspect, the vacuum pump can be configured so that the predetermined mounting posture is upward with respect to the vacuum system, and the elastic body applies an elastic force upward to the vacuum pump (seventh aspect).

In the first aspect, the vacuum pump can be configured so that the vacuum pump further comprises contraction extending means for extending contraction of the damper caused by the atmospheric pressure when the interior of the damper is under a vacuum (eighth aspect).

In the second aspect, the vacuum pump can be configured so that the vacuum pump further comprises contraction extending means for extending contraction of the damper caused by the atmospheric pressure when the interior of the damper is under a vacuum (ninth aspect).

In the third aspect, the vacuum pump can be configured so that the vacuum pump further comprises contraction extending means for extending contraction of the damper caused by the atmospheric pressure when the interior of the damper is under a vacuum (tenth aspect) .

In the fourth aspect, the vacuum pump can be configured so that the vacuum pump further comprises contraction extending means for extending contraction of the damper caused by the atmospheric pressure when the interior of the damper is under a vacuum (eleventh aspect) .

In the fifth aspect, the vacuum pump can be configured so that the vacuum pump further comprises contraction extending means for extending contraction of the damper caused by the atmospheric pressure when the interior of the damper is under a vacuum (twelfth aspect).

In the sixth aspect, the vacuum pump can be configured so that the vacuum pump further comprises contraction extending means for extending contraction of the damper caused by the atmospheric pressure when the interior of the damper is under a vacuum (thirteenth aspect).

In the seventh aspect, the vacuum pump can be configured so that the vacuum pump further comprises contraction extending means for extending contraction of the damper caused by the atmospheric pressure when the interior of the damper is under a vacuum (fourteenth aspect).

In the third aspect, the vacuum pump can be configured so that the tension adjusting means adjusts the tension of the elastic body so that the tension is equal to the weight of the vacuum pump (fifteenth aspect) .

In the second aspect, the vacuum pump can be configured so that the elastic body is formed by at least a spring or a rubber (sixteenth aspect).

### BRIEF DESCRIPTION OF THE DRAWINGS

FIG. 1 is a view showing a construction of a turbo molecular pump and a damper;
FIG. 2(A) is a graph showing the relationship between collapse amount and restoring force of a rubber, which is a vibration absorbing member of a damper, and FIG. 2(B) is a graph showing the relationship between vibration transmissibility and vibration frequency of a rubber;
FIG. 3 is a view showing a state in which a turbo molecular pump is connected to a vacuum system in a state of being turned over;
FIG. 4 is views of various types of tension adjusting means;
FIG. 5(A) is a view showing a case where a turbo molecular pump is connected horizontally to a vacuum system, and FIG. 5(B) is a view showing a modification of a case where a turbo molecular pump is connected horizontally to a vacuum system; and
FIG. 6(A) is a view showing a state in which a turbo molecular pump is connected to a vacuum system by a conventional method, and FIG. 6(B) is a view showing a state in which a turbo molecular pump is connected horizontally to a vacuum system.

### DESCRIPTION OF THE PREFERRED EMBODIMENTS

### 1. First Embodiment

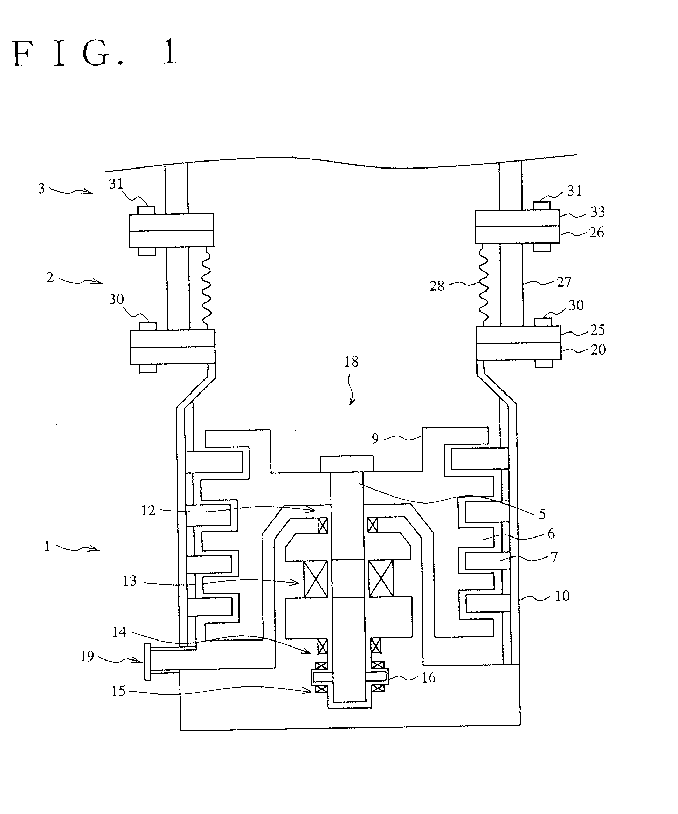

A preferred first embodiment of the present invention will be described in detail with reference to FIGS. 1 to 4. In this embodiment, description is given using a turbo molecular pump as one example of a vacuum pump.

FIG. 1 is a view showing a construction of a turbo molecular pump and a damper. FIG. 1 shows a cross section in the rotor shaft direction of the turbo molecular pump; however, for the sake of simplification of figure, for example, a line seen on the sheet back side of an inlet 18 is omitted.

FIG. 1 shows a state in which a turbo molecular pump 1 is connected to an outlet tube 3 of a vacuum system via a damper 2.

The following is a description of a schematic construction of the turbo molecular pump 1.

A magnetic bearing 12 magnetically levitates a portion on the inlet side of a rotor shaft 5 in the radial direction (in the radial direction of shaft) and holds it by means of a magnetic force of an electromagnet.

The magnetic bearing 12 is composed of a plurality of (for example, four) electromagnets arranged so as to face the periphery of the rotor shaft 5. These electromagnets attract the rotor shaft 5 by means of a magnetic force, and the rotor shaft 5 is magnetically levitated in the radial direction and held by the balance of these attracting forces.

In the vicinity of the magnetic bearing 12, a displacement sensor, not shown, is provided to detect the radial displacement of the rotor shaft 5 in a non-contact manner. A not illustrated controller for the magnetic bearing 12 carries out feedback control of magnetic force of each of the electromagnets by using the displacement detected by the displacement sensor.

A magnetic bearing 14 magnetically levitates a portion on the outlet side of a rotor shaft 5 in the radial direction (in the radial direction of shaft) and holds it. The construction and operation of the magnetic bearing 14 are the same as those of the magnetic bearing 12.

A magnetic bearing 15 magnetically levitates the rotor shaft 5 in the thrust direction (axial direction) and holds it by means of a magnetic force of an electromagnet.

In the magnetic bearing 15, a metal disk 16 formed of a material having high magnetic permeability such as iron is fixed on the rotor shaft 5 so as to be perpendicular to the rotor shaft 5. Above and below the metal disk 16, electromagnets are arranged with a predetermined clearance being provided.

The electromagnets arranged above and below the metal disk 16 attract the metal disk 16 by means of the magnetic force, and the rotor shaft 5 is magnetically levitated in the thrust direction and held by the balance of these attracting forces.

At the lower end of the rotor shaft 5 is provided a displacement sensor, not shown, to detect a displacement in the thrust direction of the rotor shaft 5 in a non-contact manner. A not illustrated controller for the magnetic bearing 15 carries out feedback control of magnetic force of each of the electromagnets arranged above and below the metal disk 16 by using the displacement detected by the displacement sensor.

By the above-described magnetic bearings 12, 14 and 15, the rotor shaft 5 is magnetically levitated in the radial and thrust directions, and is pivotally supported so as to be rotatable around the axis thereof.

A motor portion 13, which is formed in a substantially central portion in the axial direction of the rotor shaft 5, produces a torque for rotating the magnetically levitated rotor shaft 5 at a high speed.

In this embodiment, as one example, the motor portion 13 is a DC brushless motor.

The motor portion 13 is made up of two permanent magnets fixed to the rotor shaft 5 and a plurality of electromagnets fixed to a casing 10 with a predetermined clearance being provided around the permanent magnets.

The two permanent magnets on the rotor shaft 5 are fixed with the magnetic poles being shifted so that an N pole and an S pole appear around the rotor shaft 5 every 180 degrees. Also, for example, six electromagnets are arranged around the permanent magnets so that the polarity and the magnitude of magnetic field can be changed by a controller for the motor portion 13.

The not illustrated controller for the motor portion 13 generates a rotating magnetic field around the rotor shaft 5 by successively switching over the magnetic pole of the electromagnet.

A sensor for detecting the rotation phase of the rotor shaft 5 in a non-contact manner is provided, for example, at the lower end of the rotor shaft 5. The controller for the motor portion 13 carries out feedback control of the rotation of magnetic field by the rotation phase of the rotor shaft 5 detected by the sensor.

Thereby, the permanent magnets fixed on the rotor shaft 5 are attracted by the rotating magnetic field, thereby generating a torque. As a result, the rotor shaft 5 rotates around the axis thereof.

Although the motor portion 13 is configured by a brushless motor in this embodiment, the configuration of the motor portion 13 is not limited to this. The motor portion 13 may be configured by any other type of motor such as an induction motor.

A rotor 9 is installed on the inlet side of the rotor shaft 5 by using a bolt or the like. At the periphery of the rotor 9, rotor blades 6 formed of aluminum or the like material are provided radially in a multi-stage form.

At the inner periphery of the casing 10 constituting a housing for the turbo molecular pump 1, stator blades 7 formed of aluminum or the like material are provided in a multi-stage form so as to be alternate with the rotor blades 6. The casing 10 is formed of a stainless steel or the like material.

When the rotor blades 6 are driven by the motor portion 13 and rotated at a high speed, a gas is sucked through the inlet 18 by the action of the rotor blades 6 and the stator blades 7, and is discharged through an outlet 19. Thus, the rotor blades 6 and the stator blades 7, which are rotatable at a high speed, forms evacuating means.

At the upper end of the casing 10, a flange 20 formed of a stainless steel or the like material is provided so as to be connected to the damper 2.

The damper 2 is made up of flanges 25 and 26, a rubber 27, and a bellows 28.

The rubber 27, which is formed of a rubber material formed into a cylindrical shape, is a member for absorbing vibrations produced in the turbo molecular pump 1.

The both ends of the rubber 27 are connected to the flanges 25 and 26 by using an adhesive or the like. Also, the rubber 27 can be connected to the flanges 25 and 26 by another method such that female threads are provided in the end portion of the rubber 27 and the rubber 27 is fixed to the flanges 25 and 26 by bolts or such that a special-purpose mounting element is used.

The bellows 28 is a crimpy, thin-wall tube having a cross section of a continuous smooth chevron shape, and is arranged on the inside of the rubber 27 coaxially with the rubber 27. The bellows 28 provides a vacuum seal in the damper 2, and also exhibits elasticity by the expansion and contraction of side face formed into a chevron shape, by which vibrations produced in the turbo molecular pump 1 is absorbed and damped.

Also, the bellows 28 is fixed to the flange 25 and the flange 26, for example, by brazing or welding, and these joint portions are vacuum sealed. The bellows 28 forms a vacuum tube for connecting the turbo molecular pump 1 to the outlet tube 3 of the vacuum system.

The flange 25, which is formed of a metal such as a stainless steel or iron, connects the damper 2 to the turbo molecular pump 1. Between the flange 25 of the damper 2 and the flange 20 of the turbo molecular pump 1, an O-ring or a gasket, each not shown, is held. When the flange 25 and the flange 20 are tightened by bolts 30, 30, 30, ... , the flange 25 and the flange 20 are fixed to each other, and the O-ring comes in close contact with the flanges 25 and 20, which provides a vacuum seal.

The material and shape of the flange 26 are the same as those of the flange 25. The flange 26, which is a member for connecting the damper 2 to the outlet tube 3 of the vacuum system, is connected to a flange 33 of the outlet tube 3 by bolts 31, 31, 31, .... Between the flange 26 and the flange 33 is held an O-ring or a gasket, which provides a vacuum seal.

In the damper 2 constructed as described above, vibrations produced in the turbo molecular pump 1 are absorbed and damped mainly by the rubber 27, and the vacuum seal is secured by the bellows 28.

The connection between the flanges 20 and 25 and the connection between the flanges 26 and 33 may be made by using a clamper without the use of the bolts.

Next, the relationship between the collapse amount and the change in vibration damping capacity of the rubber 27 will be described.

When the turbo molecular pump 1 is installed horizontally as shown in FIG. 6(B) or when it is installed over the vacuum system in a state of being turned over, a part or the whole of the rubber 27 of the damper 2 is deflected and compressed by the weight of the turbo molecular pump 1.

Also, when the turbo molecular pump 1 is operated, the interior of the damper 2 becomes a vacuum, so that the atmospheric pressure in the radial direction of the damper 2 is mainly received by the bellows 28, and the atmospheric pressure in the axial direction of the damper 2 is mainly received by the rubber 27. Therefore, the rubber 27 is collapses mainly in the axial direction.

If the rubber 27 is collapsed and compressed by the above causes, the restoring force of the rubber 27 changes and hence the rigidity increases, so that the vibration damping capacity decreases.

Although the decrease in vibration damping capacity due to the change in restoring force also occurs in the bellows 28, vibrations are damped mainly by the rubber 27, so that hereunder, the vibration damping capacity will be described for the rubber 27. Also, the method for restraining the decrease in vibration damping capacity of the rubber 27 described below also has an effect of restraining the decrease in vibration damping capacity of the bellows 28.

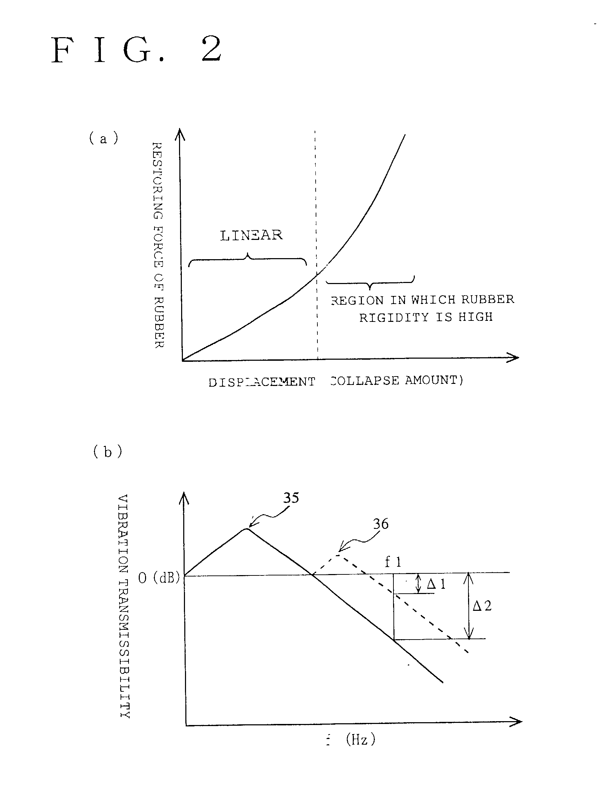

FIG. 2 (A) is a graph showing the relationship between collapse amount and restoring force of rubber, which is a raw material of the rubber 27, a vibration absorbing member of the damper 2.

The abscissas represent the displacement per unit length caused by the compression of rubber, that is, the collapse amount, and the ordinates represent the restoring force of rubber.

As seen from FIG. 2 (A) , during the time when the collapse amount is small, the restoring force of rubber is proportional to the collapse amount, that is, the relationship between collapse amount and restoring force is linear. When the collapse amount exceeds the linear range, the restoring force of rubber suddenly increases non-linearly.

The gradient of the line representing the restoring force on the graph indicates an elastic constant of rubber. Specifically, the elastic constant of rubber has a fixed value during the time when the compression is relatively small, and increases suddenly when the compression becomes large.

The increase in elastic constant of rubber means the increase in rigidity thereof. By the increase in rigidity of rubber, the resonance point of vibration is shifted to the higher frequencies. In other words, rubber becomes hard and easy to transmit vibrations.

FIG. 2(B) is a graph showing the relationship between vibration transmissibility and vibration frequency of rubber, which is a raw material of the rubber 27. That is to say, this graph represents the degree of transmission of vibrations produced at one end of rubber to the other end thereof.

The curve indicated by the solid line is a graph in the case where the rubber is not compressed, and the curve indicated by the dotted line is a graph in the case where the rubber is compressed. As seen from this figure, when the rubber is compressed, the rigidity of rubber increases, so that the resonance point shifts from a resonance point 35 to a resonance point 36. That is, the resonance point shifts to higher frequencies.

As an example, it is assumed that vibrations of a frequency of f1 [Hz] are applied to one end of rubber. From FIG. 2(B), when the rubber is not compressed, the vibrations are damped to -Δ2 [dB], while when the rubber is compressed, the vibrations are damped only to -Δ1 [dB]. Herein, Δ2 is higher than Δ1.

If the rubber is compressed in this manner, vibrations become liable to be transmitted, and thus the vibration damping capacity decreases.

Thus, if the turbo molecular pump 1 is installed to the vacuum system in a state of being turned over or horizontally, the rubber 27 of the damper 2 is deflected by the weight of the turbo molecular pump 1, so that a part or the whole of the rubber 27 is compressed, which results in a decrease in vibration damping capacity of the rubber 27. Also, if the interior of the vacuum 2 becomes a vacuum, the rubber 27 is further compressed by the atmospheric pressure.

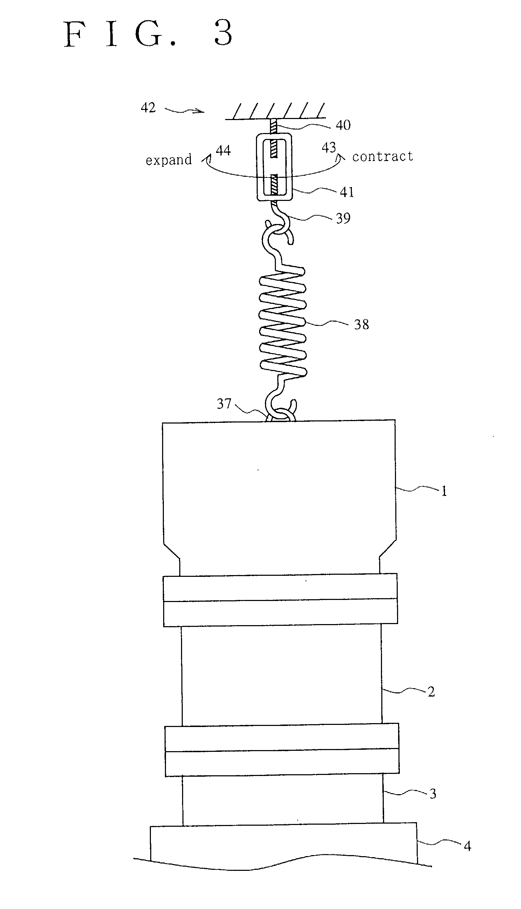

FIG. 3 is a view showing one example of the embodiment in the case where the turbo molecular pump 1 is connected to the vacuum system 4 in a state of being turned over.

When the turbo molecular pump 1 is turned over, the rubber 27 of the damper 2 is deformed and compressed by the weight of the turbo molecular pump 1 and the atmospheric pressure, and thus the resonance point of the rubber 27 shifts to higher frequencies, so that high vibration damping capacity cannot sometimes be obtained. Therefore, the compression of the rubber 27 is restrained by pulling the turbo molecular pump 1 upward by an elastic body such as a spring 38, whereby the decrease in vibration damping capacity of the rubber 27 is relaxed. The spring 38 forms extending means for extending the deformed damper.

As described with reference to FIG. 1, the turbo molecular pump 1 is connected to the outlet tube 3 of the vacuum system 4 via the damper 2.

At the bottom of the turbo molecular pump 1 (on the top in FIG. 3 because the turbo molecular pump 1 is turned over) , a spring attaching member 37 is provided, and one end of the spring 38 is attached to the spring attaching member 37. The spring attaching member 37 is formed of, for example, an eyebolt. On the other end of the spring 38 is attached a hook 39.

One end portion of the hook 39 is formed threads, and the hook 39 is screwed in female threads formed in one end portion of a tension adjusting element 41.

The tension adjusting element 41 is used to adjust the length of the spring 38 to adjust the tension for pulling the turbo molecular pump 1 by using the spring 38.

In the other end portion of the tension adjusting element 41 is also formed female threads, and an male screw 40 is screwed in a fixed portion 42 such as a ceiling, which is located over the turbo molecular pump 1.

The direction of the threads formed on the tension adjusting element 41 is such that when the tension adjusting element 41 is turned in a direction 43, both of the hook 39 and the external screw 40 are screwed in, and when the tension adjusting element 41 is turned in a direction 44, both of the hook 39 and the male screw 40 separate from the tension adjusting element 41.

The male screw 40 is fixed to, for example, the ceiling of a room in which the vacuum system 4 is installed or a fixed portion provided to pull the turbo molecular pump 1 upward.

Therefore, the spring 38 can be extended or contracted according to the direction in which the tension adjusting element 41 is turned, by which the pulling force of the spring 38 can be adjusted. Thus, the tension adjusting element 41, the hook 39, and the male screw 40 form tension adjusting means of the spring 38.

When the vibration damping capacity is decreased by a change of spring characteristic of the damper 2 caused by the weight of the turbo molecular pump 1 or the atmospheric pressure, by providing tension adjusting means (for example, the hook 39, the male screw 40, and the tension adjusting element 41) for extending the damper 2, adjustment can be made so that the optimal spring characteristic of the damper 2 is obtained by the following procedure.
(1) The tension of a pulling mechanism (spring 38) is adjusted.
(2) The turbo molecular pump 1 is started to check the vibration isolating effect.
(3) Items (1) and (2) are repeated until a good result is obtained.

When the turbo molecular pump 1 is not operated and the interior of the damper 2 is under the atmospheric pressure or under a pressure close to the atmospheric pressure, the damper 2 is contracted mainly by the weight of the turbo molecular pump 1, and compression due to the atmospheric pressure is not effected. If a high tension caused by the spring 38 acts on the damper in such a case, an excessive load is sometimes given to the damper 2.

In order for the spring 38 to give a high tension when the interior of the damper 2 is under a vacuum and the damper 2 is contracted by the atmospheric pressure, and for the spring 38 not to give a high tension when the interior of the damper 2 is under the atmospheric pressure or under a pressure close to the atmospheric pressure and the damper 2 is not contracted, it is necessary only that the spring 38 use a large elastic constant (spring constant) so that the tension of the spring 38 at the time when the damper 2 is contracted by the atmospheric pressure is approximately equal to the weight of the turbo molecular pump 1.

If the spring 38 is set as described above, when the turbo molecular pump 1 is not operated and the interior of the damper 2 is under the atmospheric pressure or under a pressure close to the atmospheric pressure, the application of the weight of the turbo molecular pump 1 to the damper 2 is prevented, and when the turbo molecular pump 1 is operated and the interior of the damper 2 is under a vacuum so that the damper 2 is contracted, a high tension can be given relative to small contraction of the damper 2.

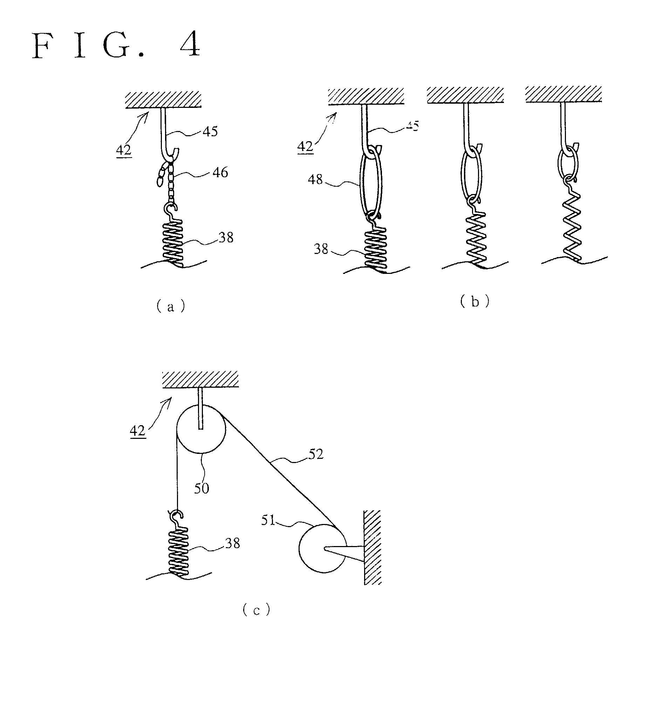

FIG. 4 is views of various examples of tension adjusting means.

FIG. 4(A) shows an example in which the length of the spring 38 is changed by the hooked position of a chain. A lower portion under the spring 38, including the turbo molecular pump 1, is not shown in the figure.

The fixed portion 42 is provided with a hook 45. On the other hand, at the upper end of the spring 38 is provided a chain 46. By hooking an appropriate position of the chain 46 to the hook 45, the spring 38 can be pulled upward.

By changing the chain position hooked to the hook 45, the length of the spring 38 is changed, whereby the tension of the spring 38 can be adjusted.

FIG. 4 (B) shows an example in which the spring 38 is connected to the hook 45 by using a metal element 48. Elliptical metal elements 48 having various lengths are prepared. By connecting the spring 38 to the hook 45 by using the metal element 48 having a different length, the length of the spring 38 can be changed.

The upper end portion of the spring 38 is formed into a hook shape, so that the upper end portion can be hooked to one end of the elliptical metal element 48. Further, by hooking the other end portion of the metal element 48 to the hook 45, a tension can be given to the spring 38.

As described above, in this example, by adjusting the length of the spring 38 by replacing the metal element 48 with one having a different length in the longitudinal direction of the elliptical shape, the metal element 48 which achieves the greatest vibration isolating effect of the damper 2 can be determined.

FIG. 4 (C) shows an example in which the spring 38 is pulled by a winding machine 51 via a pulley 50 to change the length of the spring 38.

The pulley 50 is installed to the fixed portion 42.

The upper end of the spring 38 is attached to a wire rope 52. The wire rope 52 is wound around the winding machine 51 via the pulley 50.

The winding machine 51 is installed to a fixed portion such as a wall of a room in which the turbo molecular pump 1 is installed. The winding machine 51 is provided with a clamp, not shown, so that the user can wind up the wire rope 52 by using this clamp. Also, the winding machine 51 is provided with a detent for preventing reverse rotation. By releasing this detent, the wire rope 52 can be let loose.

The user can adjust the tension of the spring 38 by adjusting the winding amount of the wire rope 52.

The turbo molecular pump 1, which is arranged in a state of turned over as shown in FIG. 3, the damper 2, the spring 38, etc. operate as described below.

When the turbo molecular pump 1 is stopped, since the tension of the spring 38 is set so that the downward force caused by the weight of the turbo molecular pump 1 is approximately equal to the upward force caused by the tension of the spring 38, no great force acts on the damper 2.

When the turbo molecular pump 1 is started, the rotor shaft 5 is magnetically levitated by the magnetic bearings 12, 14 and 15. After the rotor shaft 5 is magnetically levitated, the motor portion 13 is operated, so that the rotor shaft 5 starts to rotate at a high speed together with the rotor 9. When the rotor 9 rotates at a high speed, the gas in the vacuum system 4 is sucked through the inlet 18 by the action of the rotor blades 6 and the stator blades 7, and discharged through the outlet 19.

Also, as the rotor shaft 5, the rotor 9, and the rotor blades 6 rotate, vibrations occurs in the turbo molecular pump 1.

The vibrations occurring in the turbo molecular pump 1 are absorbed by the rubber 27 and the bellows 28 of the damper 2 and the spring 38.

As the vacuum in the vacuum system 4 increases, the atmospheric pressure is applied to the damper 2, so that the damper 2 is contracted toward the lower side of figure. Accordingly, the spring 38 extends and gives a tension to the damper 2. The length of the damper 2 becomes a length such that the downward force caused by the weight of the turbo molecular pump 1 and the upward force caused by the spring 38 are balanced.

The contraction of the damper 2 is reduced by the tension of the spring 38. As a result, high vibration damping capacity of the damper 2 can be maintained.

Also, the user can set the tension of the spring 38 at the optimal value, at which the highest vibration damping capacity of the damper 2 can be obtained, by adjusting the length of the spring 38 by turning the tension adjusting element 41.

The above-described embodiment can achieve the effects as described below.

The turbo molecular pump 1 can be installed over the vacuum system 4 in a state of being turned over.

Since the compression of the rubber 27 of the damper 2 caused by the atmospheric pressure and the weight of the turbo molecular pump 1 can be relaxed by the tension of the spring 3, the decrease in vibration damping capacity of the damper 2 can be reduced.

The pulling mechanism can have a construction for adjusting the pulling force. The pulling force can be adjusted by changing the length of the member (rubber, spring, etc.) used for the pulling mechanism. Concretely, the tension is set at the optimal value by adjusting the length of the spring 38 by the use of the tension adjusting element 41.

The pulling mechanism for pulling the turbo molecular pump 1 upward is simple in construction and low in cost.

Although the turbo molecular pump 1 is pulled upward by using the spring 38 in this embodiment, the pulling mechanism is not limited to this, and another elastic body such as rubber may be used.

Also, the tension adjusting means for adjusting the pulling force of the spring 38 is not limited to the means shown in FIGS. 3 and 4, and another method may be used to adjust the pulling force. For example, the optimal spring 38 can be determined by using the springs 38 having various lengths or by using the springs having various spring constants.

### 2. Second Embodiment

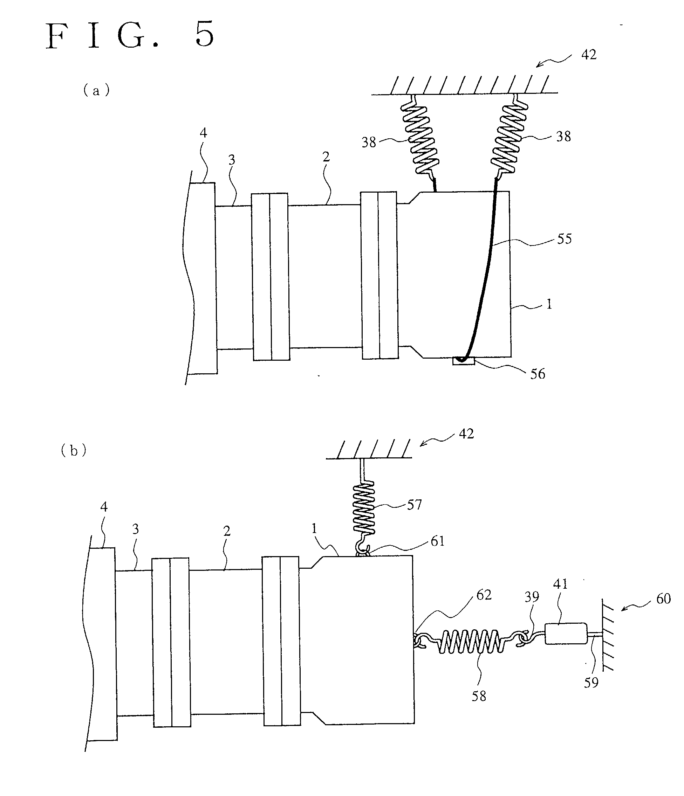

Next, a second embodiment will be described with reference to FIG. 5. The turbo molecular pump 1, the damper 2, the outlet tube 3, and the vacuum system 4 used in the second embodiment are the same as those used in the first embodiment. Description is given by applying the same reference numerals to the elements corresponding to those in the first embodiment.

FIG. 5(A) is a view showing a state in which the turbo molecular pump 1 is connected horizontally to the vacuum system 4.

The outlet tube 3 is formed horizontally with respect to the vacuum system 4. The damper 2 is connected horizontally to the outlet tube 3, and further the turbo molecular pump 1 is connected horizontally to the damper 2.

The fixed portion 42 such as the ceiling over the turbo molecular pump 1 is provided with the springs 38, 38. Although not shown in the figure, the end portion of the spring 38, 38 is formed into a hook shape, and is installed to a hook formed on the fixed portion 42.

When the centerline of the turbo molecular pump 1 is located on the sheet of figure, the mounting positions of the springs 38, 38 are on the surface side and the back surface side of the sheet. Therefore, even if a force in the direction perpendicular to the sheet is applied to the turbo molecular pump 1, movement in the direction perpendicular to the sheet of the turbo molecular pump 1 can be restrained, by which deflection in the direction perpendicular to the sheet of the turbo molecular pump 1 can be restrained.

At the lower ends of the springs 38, 38 is installed a rubber 55 via an attaching element, not shown. One end of the rubber 55 is attached to one of the springs 38, 38, and the other end of the rubber 55 is attached to the other of the springs 38, 38.

Therefore, the rubber 55 has a shape such that the center thereof hangs down in an arcuate shape, and the lower end of the outer peripheral portion of the casing 10 of the turbo molecular pump 1 is installed to this arcuate portion.

The lowest end portion of the arcuate portion of the rubber 55 and the casing 10 are fixed to each other by an attaching element 56.

The lengths of the springs 38, 38 and the rubber 55 are set at values such that the turbo molecular pump 1 is horizontal.

The turbo molecular pump 1 tends to lower as shown in FIG. 6(B) by means of the weight thereof. However, since the springs 38, 38 and the rubber 55 hang the turbo molecular pump 1 upward, the damper 2 can be prevented from being deflected downward and deformed by the weight of the turbo molecular pump 1.

Thereby, the turbo molecular pump 1 can be installed to the vacuum system 4 in the horizontal posture while the decrease in vibration damping capacity of the damper 2 is reduced.

The elastic constant of the rubber 55 is set so as to be larger than the elastic constant of the springs 38, 38, and thus the vibrations of the turbo molecular pump 1 is absorbed mainly by the springs 38, 38 and the damper 2.

In the case of FIG. 6(A), when the damper 2 is subjected to the atmospheric pressure and is contracted, the contracting force acts in the horizontal direction, and contrarily the direction of tension of the spring 38, 38 is the upward direction, so that the contracting force of the damper 2 scarcely acts on the springs 38, 38. In this example, therefore, the springs 38, 38 absorb the force of turbo molecular pump 1 lowering under gravity and the vibrations produced in the turbo molecular pump 1, but do not extend the compression of damper due to the atmospheric pressure.

The second embodiment configured as described above operates as described below.

When the turbo molecular pump 1 is stopped, the turbo molecular pump 1 that tends to lower by means of the weight thereof is hung upward by the springs 38, 38, so that the turbo molecular pump 1 is held in the horizontal mounting posture.

When the turbo molecular pump 1 is operated, the turbo molecular pump 1 carries out evacuation of the vacuum system 4. Since the turbo molecular pump 1 is kept in the horizontal posture by the springs 38, 38, the lower part of the rubber 27 of the damper 2 is not locally compressed as shown in FIG. 6(B), and high vibration damping capacity can be exhibited.

In the turbo molecular pump 1, vibrations are produced by the rotation of the rotor shaft 5 and the rotor blades 9. However, these vibrations are absorbed by the damper 2 and the springs 38, 38. Therefore, the vibrations propagating from the turbo molecular pump 1 to the vacuum system 4 are restrained effectively.

The above-described embodiment can achieve the effects described below.

The turbo molecular pump 1 can be installed horizontally to the vacuum system 4.

Since the turbo molecular pump 1 is not lowered by its weight, the lower part of the rubber 27 of the damper 2 is not collapsed locally, so that the damper 2 can exhibit high vibration damping capacity.

The vibrations produced in the turbo molecular pump 1 can be absorbed by not only the damper 2 but also the springs 38, 38 and the rubber 55.

Since the turbo molecular pump 1 is hung by the two springs 38, 38 extending from different directions to the turbo molecular pump 1, the movement of the turbo molecular pump 1 in the direction perpendicular to the sheet of FIG. 5(A) can be restrained.

FIG. 5(B) is a view for illustrating a modification of the second embodiment.

In this modification, the turbo molecular pump 1 is hung vertically, and also an extending force is applied to the damper 2.

The casing 10 of the turbo molecular pump 1 is formed with a spring attaching member 61. One end of a spring 57 is fixed to the fixed portion 42. The other end of the spring 57 is attached to the spring attaching member 61, whereby the turbo molecular pump 1 is raised upward,

More concretely, although not shown in the figure, a hook is provided on the fixed portion 42, and on the other hand, at both ends of the spring 57, hooks are also provided. The spring attaching member 61 is, for example, an eyebolt. By hooking the hooks at both ends of the spring 57 to the hook provided on the fixed portion 42 and the eyebolt, the turbo molecular pump 1 is hung from the fixed portion 42.

At the bottom of the turbo molecular pump 1, a spring attaching member 62 formed by, for example, an eyebolt is provided. To the spring attaching member 62 is attached a hook at one end of a spring 58. The other end of the spring 58 is also formed into a hook shape, and is attached to a hook 39.

The other end portion of the hook 39 is formed with male threads, and is screwed in female threads formed in the tension adjusting element 41. At the other end of the tension adjusting element 41 is formed female threads, in which a male screw 59 is screwed, one end of the male screw 59 being fixed to a fixed object 60 such as a wall.

As in the case of the first embodiment, the length of the spring 58 is adjusted by turning the tension adjusting element 41, by which the tension of the spring 58 can be adjusted.

While actually the turbo molecular pump 1 is operated and the produced vibrations are observed, the tension of the spring 58 can be set at a value such that the vibrations are at the minimum by using the tension adjusting element 41.

When the turbo molecular pump 1 is not operated and the interior of the damper 2 is under the atmospheric pressure or under a pressure close to the atmospheric pressure, the damper 2 is not compressed by the surrounding atmospheric pressure. In such a case, if a great tension due to the spring 58 acts on the damper 2, an excessive load is sometimes given to the damper 2.

Thus, in order that the spring 58 gives a great tension when the interior of the damper 2 is under a vacuum and is contracted by the atmospheric pressure, and that the spring 58 does not give a great tension when the interior of the damper 2 is under the atmospheric pressure or under a pressure close to the atmospheric pressure and is not contracted, it is necessary only that the elastic constant (spring constant) of the spring 58 be increased so that the length of the spring 58 at the time when the damper 2 is not contracted is approximately a natural length. The natural length means a length of spring at the time when no load is applied to the spring.

If the spring 58 is set in this manner, when the turbo molecular pump 1 is not operated and the interior of the damper 2 is under the atmospheric pressure or under a pressure close to the atmospheric pressure, the tension of the spring 58 is low, and when the turbo molecular pump 1 is operated and the interior of the damper 2 is under a vacuum, a great tension can be exhibited relative to small contraction of the damper 2.

The modification configured as described above operates as described below.

When the turbo molecular pump 1 is not operated and the damper 2 is not contracted by the atmospheric pressure, the tension of the spring 57 acts over the turbo molecular pump 1 to keep the turbo molecular pump 1 in the horizontal posture, so that the turbo molecular pump side of the damper 2 is not deflected downward. Also, since the spring 58 has a length close to the natural length, the tension of the spring 58 acting on the right-hand side in the figure of the damper 2 does not become excessive.

When the turbo molecular pump 1 is operated, the rotor shaft 5 is driven by the motor portion 13 and is rotated at a high speed. Accordingly, the rotor 9 and the rotor blades 6 are rotated, and the gas in the vacuum system 4 is evacuated by the action of the rotor blades 6 and the stator blades 7, so that the interior of the damper 2 becomes a vacuum. Also, the turbo molecular pump 1 produces vibrations by vibrations caused by high-speed rotation of the body of rotation such as the rotor 9 and the rotor blades and vibrations occurring in the motor portion 13.

Also, when the interior of the damper 2 becomes a vacuum, a contracting force acts on the damper 2 due to the atmospheric pressure. The contraction of the damper 2 due to the atmospheric pressure is relaxed by the tension of the spring 58. Also, since the turbo molecular pump 1 is kept in the horizontal posture by the tension of the spring 57, the damper 2 is not deflected by the weight of the turbo molecular pump 1.

Thus, the local contraction of the rubber 27 of the damper 2 caused by the weight of the turbo molecular pump 1 and the horizontal contraction thereof caused by the atmospheric pressure are relaxed, so that the damper 2 can exhibit high vibration damping capacity.

Therefore, the vibrations produced in the turbo molecular pump 1 are absorbed by the damper 2, and thus the vibrations propagated from the turbo molecular pump 1 to the vacuum system 4 are damped.

This modification can achieve the effects described below.

By giving a tension to the turbo molecular pump 1 in the direction such that the damper 2 is extended, the compression of the damper 2 caused by the atmospheric pressure can be relaxed. Therefore, the decrease in vibration damping capacity caused by the increase in rigidity of the damper 2 can be relaxed.

The tension of the spring 58 can be set at an optimal value by the tension adjusting element 41.

Although the turbo molecular pump 1 is raised upward by one spring 57 in this modification, the turbo molecular pump 1 may be raised by using the two springs 38, 38 as in the case of the second embodiment.

Also, in place of the springs 57 and 58, another elastic bodies such as rubbers may be used.

As described above, in the first embodiment, the second embodiment, and the modification of the second embodiment, the turbo molecular pump has a structure for supporting the pump weight in at least one direction that is different from the direction in which the pipe on the measurement chamber side is provided, and this structure has means for adjusting the tension (adjustment is made by changing the length by, for example, the force of rubber or spring) . Therefore, even if the turbo molecular pump is installed horizontally or in a state of being turned over, the damping effect can be maintained.

Also, the mounting posture of the turbo molecular pump is not limited to the horizontal posture or the turned-over posture. For example, the turbo molecular pump can be held in a posture of any direction such as the slant upward direction or the slant downward direction.

Although the turbo molecular pump has been used as one example of a vacuum pump in the first embodiment, the second embodiment, and the modification of the second embodiment, the pump type is not limited to this. For example, another molecular pump such as a helical groove pump or a mechanical vacuum pump such as a rotary pump in which vibrations are absorbed by a damper may be used.

## Claims

1. A vacuum pump comprising a vacuum pump body including:
a casing formed with an inlet and an outlet; and
evacuating means which is housed in said casing to suck a gas from a vacuum system through said inlet and discharge the gas through said outlet,
and further comprising extending means for extending deformation occurring in a damper attached to said inlet due to the weight of said vacuum pump body when said vacuum pump body is installed in a predetermined mounting posture.

2. The vacuum pump according to claim 1, wherein said extending means is an elastic body one end of which is attached to a fixed portion and the other end of which is attached to said vacuum pump, and said elastic body applies a tension in the direction such as to restore the shape of the deformed damper.

3. The vacuum pump according to claim 2, wherein said vacuum pump further comprises tension adjusting means for adjusting the tension of said elastic body.

4. The vacuum pump according to claim 2 or claim 3, wherein said predetermined mounting posture is horizontal with respect to said vacuum system, and said elastic body applies an elastic force upward to said vacuum pump.

5. The vacuum pump according to claim 2 or claim 3, wherein said predetermined mounting posture is upward with respect to said vacuum system, and said elastic body applies an elastic force upward to said vacuum pump.

6. The vacuum pump according to any one of claims 1 to 5, wherein said vacuum pump further comprises contraction extending means for extending contraction of said damper caused by the atmospheric pressure when the interior of said damper is under a vacuum.

7. The vacuum pump according to claim 3, wherein said tension adjusting means adjusts the tension of said elastic body so that said tension is equal to the weight of said vacuum pump.

8. The vacuum pump according to any one of claims 2 to 7, wherein said elastic body is formed by at least a spring or a rubber.
